# EUROPÄISCHE PATENTSCHRIFT

(11) **EP 1 136 320 B1**
(45) Veröffentlichungstag und Bekanntmachung des Hinweises auf die Patenterteilung: **30.08.2006**
(21) Anmeldenummer: 01104670.3
(22) Anmeldetag: 24.02.2001
(51) Int. Cl.: B60R 5/04

(54) **Abdeckvorrichtung für Fahrzeuge, insbesondere für Kombinations-Personenkraftwagen od. dgl.**
Covering element for vehicles, in particular for multi-purpose vehicles or the like
Elément de recouvrement pour véhicules, en particulier véhicules du type break ou pareils

(30) Priorität: 20.03.2000 DE 10013531
(43) Veröffentlichungstag der Anmeldung: 26.09.2001
(73) Patentinhaber: BOS GmbH & Co. KG, 73760 Ostfildern (DE)
(72) Erfinder: Butz, Peter, 20149 Hamburg (DE)
(74) Vertreter: Patentanwälte Ruff, Wilhelm, Beier, Dauster & Partner

(56) Entgegenhaltungen:
- EP-A- 0 741 057
- EP-A- 1 065 102
- DE-A- 4 040 038
- US-A- 4 220 367
- US-A- 4 502 674
- US-A- 4 671 557
- US-A- 5 067 546
- PATENT ABSTRACTS OF JAPAN vol. 1997, no. 07, 31. Juli 1997 (1997-07-31) & JP 09 086279 A (KASAI KOGYO CO LTD;NHK SPRING CO LTD), 31. März 1997 (1997-03-31)

## Beschreibung

Die Erfindung betrifft eine Abdeckvorrichtung für Fahrzeuge, insbesondere für Kombinations-Personenkraftwagen od. dgl. entsprechend dem Oberbegriff des Anspruchs 1. Eine solche Abdeckvorrichtung für Fahrzeuge, und zwar eine Rolloabdeckung für den Gepäckraum eines Kombinations-Personenkraftwagens, ist in der DE 40 40 038 A1 beschrieben.

Das Endbord der Abdeckvorrichtung gemäß der DE 40 40 038 A1 dient dazu, die sich in ihrer Schließstellung befindliche Vorrichtung, d.h. den Randbereich der ausgezogenen Stoffbahn, im wesentlichen lückenlos an die Kontur des Fahrzeug-Innenraums anzuschließen. Die Versteifung des Endbords im Vergleich zur übrigen flexiblen Werkstoffbahn wird beim Bekannten dadurch erreicht, dass eine Zwischenlage aus steiferem Material, beispielsweise aus einer Tafel aus Kunststoff, Karton oder Holz zwischen zwei Lagen der Werkstoffbahn eingenäht ist.

In erster Linie dient das Endbord beim Bekannten der Zughandhabung der Werkstoffbahn und dazu, die beiden Haltefortsätze beim Schließen der Vorrichtung in fahrzeugseitige Widerlager einzuhängen oder die Haltefortsätze beim Öffnen der Vorrichtung aus den fahrzeugseitigen Widerlagern herauszuheben. Um diese Handhabungen zu erleichtern, ist das Endbord mit Griffhandhaben versehen.

Bauform und, damit einhergehend die Fertigungsweise, werden beim Gegenstand der DE 40 40 038 A1 als verbesserungsbedürftig empfunden. Ausgehend von der Abdeckvorrichtung gemäß der DE 40 40 038 A1, liegt der Erfindung die Aufgabe zugrunde, die bekannte Vorrichtung durch Neugestaltung des Endbord-Bereichs rationeller herstellen und vielseitiger einsetzen zu können.

In Verbindung mit den Merkmalen des Oberbegriffs des Anspruchs 1 wird diese Aufgabe entsprechend der Erfindung dadurch gelöst, dass das Endbord ein separates Bauteil bildet, welches der Werkstoffbahn, benachbart den Haltefortsätzen, mittels im wesentlichen formsteifer Formschluß- und/oder Klemmittel angefügt ist.

Ein bedeutender Vorteil der erfindungsgemäßen Abdeckvorrichtung besteht darin, dass das Endbord nicht mehr durch aufwendige Handarbeit, insbesondere nicht mehr durch aufwendige Näh- oder Schweißarbeit, hergestellt werden muss, sondern dass das Endbord unabhängig von der Verarbeitung der flexiblen Werkstoffbahn hergestellt werden kann.

Das erfindungsgemäße Endbord kann beispielsweise aus einem einzigen oder aus mehreren Kunststoffspritzgussteilen oder aus anderen Werkstoffteilen gefertigt und sodann formschlüssig und/oder klemmschlüssig an die Werkstoffbahn angefügt sein.

Durch die Unabhängigkeit von Werkstoffbahn und Endbord ist auch die Möglichkeit gegeben, speziell für die Festigkeitseigenschaften des Endbords bestimmte Werkstoffe einsetzen und mit der Werkstoffbahn kombinieren zu können.

Von einem anderen bekannten Abdeckrollo gemäß der DE 195 37 768 C ist es bekannt, eine flexible Abdeckfahne, die ansonsten über keine Handhabungsfunktionen verfügt, sondern nur einen Spalt zwischen Fondsitzlehnen und Rollogehäuse schließen soll, mittels einer Kederanordnung am Rollogehäuse formschlüssig zu sichern.

Weitere Erfindungsmerkmale sind den Unteransprüchen zu entnehmen.

In den Zeichnungen sind bevorzugte Ausführungsbeispiele entsprechend der Erfindung dargestellt, es zeigt
Fig. 1 eine schematische räumliche Draufsicht auf eine von einem Abdeckrollo gebildete Abdeckvorrichtung für einen Kombinations-Personenkraftwagen,
Fig. 2 eine gegenüber Fig. 3 vergrößerte räumliche Detaildarstellung, etwa entsprechend der in Fig. 1 mit II bezeichneten Blickrichtung und
Fig. 3-7 unterschiedliche Ausgestaltungen der Befestigung eines Endbords an einer Werkstoffbahn jeweils im Längsschnitt, zum Teil auch räumlich dargestellt.

In den Zeichnungen ist eine Abdeckvorrichtung, im vorliegenden Fall ein Abdeckrollo für einen Kombinations-Personenkraftwagen, insgesamt mit der Bezugsziffer 10 bezeichnet.

Das Abdeckrollo 10 weist ein kassettenartiges Gehäuse 11 mit einer nicht gezeigten Wickelwelle auf, von welcher eine Werkstoffbahn 12, im vorliegende Falle eine textile Rollobahn, entgegen der Rückstellkraft eines auf die Wickelwelle einwirkenden Federmotors (nicht dargestellt) in Schließrichtung a ausgezogen und sodann in der ausgezogenen Schließstellung fahrzeugseitig lösbar befestigt werden kann.

Die Öffnungsrichtung ist mit b bezeichnet. Das Gehäuse 11 ist im übrigen in nicht näher gezeigter Weise fahrzeugseitig befestigt, häufig lösbar befestigt, und zwar in einem Bereich hinter den Fondsitzlehnen.

Am freien Rand R der Werkstoffbahn 12 ist ein insgesamt mit E bezeichnetes Endbord befestigt. Das Endbord E dient der Zughandhabung der Werkstoffbahn 12 und auch dem Einhängen der beiden Haltefortsätze 13 in nicht gezeigte fahrzeugseitige Halteaussparungen bzw. dem Aushängen aus letzteren heraus. Zur Erleichterung der Handhabung ist das Endbord E mit Griffaussparungen 14 versehen.

Das Endbord E kann auf unterschiedliche Weise ausgebildet und an der Werkstoffbahn 12 befestigt sein., Unabhängig von der individuellen Ausgestaltung der jeweiligen Ausführungsform tragen alle miteinander im weitesten Sinne vergleichbaren analogen Bauteile dieselben Bezugsziffern.

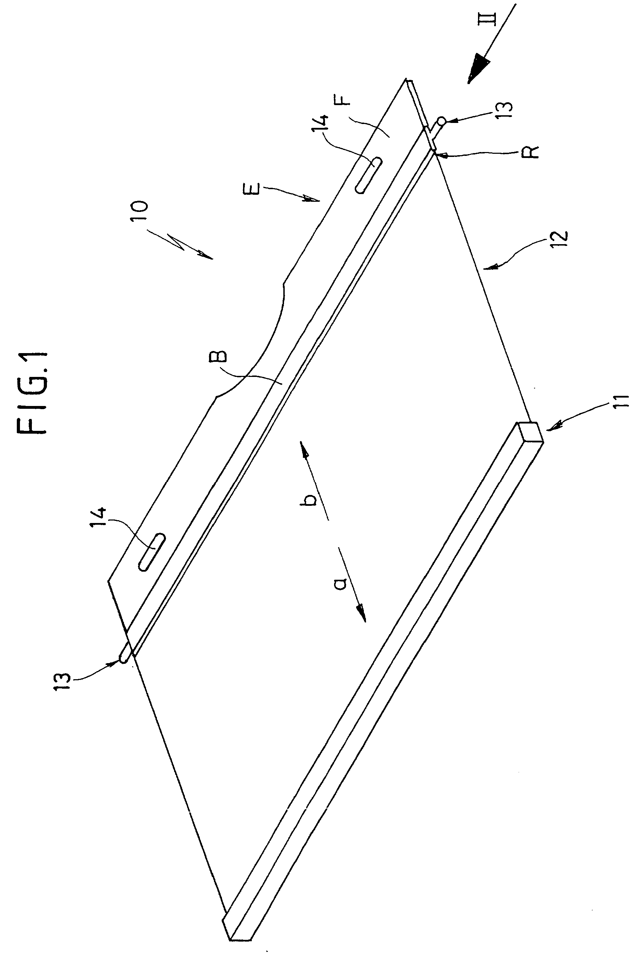

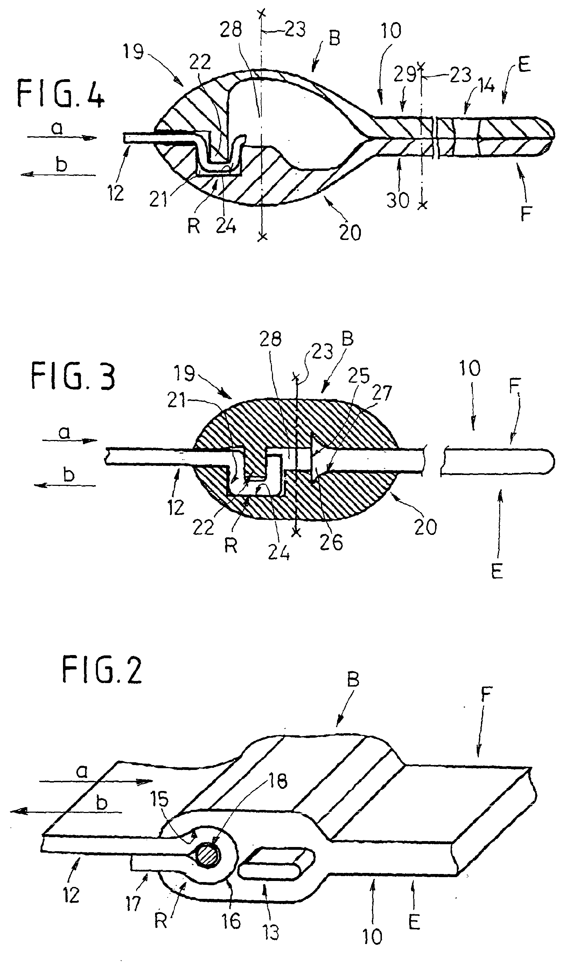

In Fig. 2 ist ein Detail entsprechend der in Fig. 1 mit II bezeichneten Blickrichtung wiedergegeben. Das gesamte Endbord E gemäß Fig. 2 bildet ein stoffschlüssig zusammenhängendes Formteil, insbesondere ein Kunststoffspritzgussteil, welches an seinem der Werkstoffbahn 12 zugewandten Randbereich einen leistenartig verdickten Befestigungsbereich B und eine zum freien Rand R der Werkstoffbahn 12 hin längsseitig offene hinterschnittene Kedernut 15 bildet.

Der freie Rand R der Werkstoffbahn 12 ist korrelierend bezüglich der Kedernut 15 als Keder 16 ausgebildet. Dazu ist die Werkstoffbahn 12 an ihrem freien Rand R als einfache Schlaufe 17 geführt, welche einen hinreichend festen, ansonsten aber flexiblen, Kederkern 18 aufnimmt. Die Schlaufe 17 kann bei Bedarf naht- oder schweißfixiert sein.

Das aus einem festen Werkstoff, insbesondere aus einem festen Kunststoff, hergestellte Endbord E bildet zudem die Haltefortsätze 13, welche dem Körper des Endbords E stoffschlüssig angeformt sind.

Anstelle der stoffschlüssig angeformten Haltefortsätze 13 ist es auch möglich, das Endbord E in nicht gezeigter Weise mit einem sich quer zur Schließrichtung a erstreckenden Längshohlraum zu versehen, durch welchen hindurch eine ebenfalls nicht dargestellte Haltestange gesteckt ist, die mit ihren beidendseitig überstehenden Stangenenden die Haltefortsätze 13 bildet.

An den leistenartig verdickten Befestigungsbereich B gemäß Fig. 2 ist übrigens ein den freien Rand des Endbords E bildendes Flächenelement F stoffschlüssig angeformt. Während die Befestigung der Werkstoffbahn 12 am Endbord E überwiegend formschlüssig gestaltet ist, geschieht die Befestigung der Werkstoffbahn 12 bei dem in Fig. 3 gezeigten Ausführungsbeispiel klemmschlüssig. Hierzu bildet der Befestigungsbereich B ein oberes Bauteil 19 und ein unteres Bauteil 20. Obwohl beide Bauteile 19, 20 in Fig. 3 mit gleichgerichteter Schraffur gezeichnet sind, handelt es sich um separate Bauteile. Im unteren Bauteil 20 ist eine Klemmnut 21 vorgesehen, während am oberen Bauteil 19 eine Klemmleiste 22 ausgebildet ist. Oberes Bauteil 19 und unteres Bauteil 20 sind mittels einer Schraubverbindung 23 fest gegeneinandergezogen. Auf diese Weise presst die Klemmleiste 22 den freien Rand R der Werkstoffbahn 12 fest gegen den Klemmnut-Boden 24.

Die beiden Bauteile 19, 20 gemäß Fig. 3 dienen zugleich der Befestigung des Flächenelements F. Hierzu weist letzteres an seinem zur Werkstoffbahn 12 weisenden Rand 25 eine Verdickung 26 auf, welche in einer von beiden Bauteilen 19, 20 gemeinsam gebildeten Befestigungsnut 27 form- und klemmschlüssig gehalten ist.

Beim Ausführungsbeispiel gemäß Fig. 3 können entweder das obere Bauteil 19 oder das untere Bauteil 20 oder beide Bauteile 19, 20 zusammen die beiden Haltefortsätze 13 bilden. Auch gestattet es die Ausführungsform gemäß Fig. 3, durch einen mittig zwischen den beiden Bauteilen 19, 20 angeordneten Längskanal 28 eine Haltestange mit beidendseitig überstehenden Stangenenden hindurchzuführen.

Die Ausführungsform gemäß Fig. 4 ähnelt der Ausführungsform gemäß Fig. 3 weitestgehend, mit dem Unterschied indessen, dass das obere Bauteil 19 und das untere Bauteil 20 jeweils einen Fortsatz 29, 30 aufweisen. Beide aneinander gelegten und aneinander befestigten Fortsätze 29, 30 stellen gemeinsam das Flächenelement F dar. Mit zueinander ausgerichteten Durchbrüchen bilden die beiden Fortsätze 29, 30 zugleich mindestens eine Griffaussparung 14.

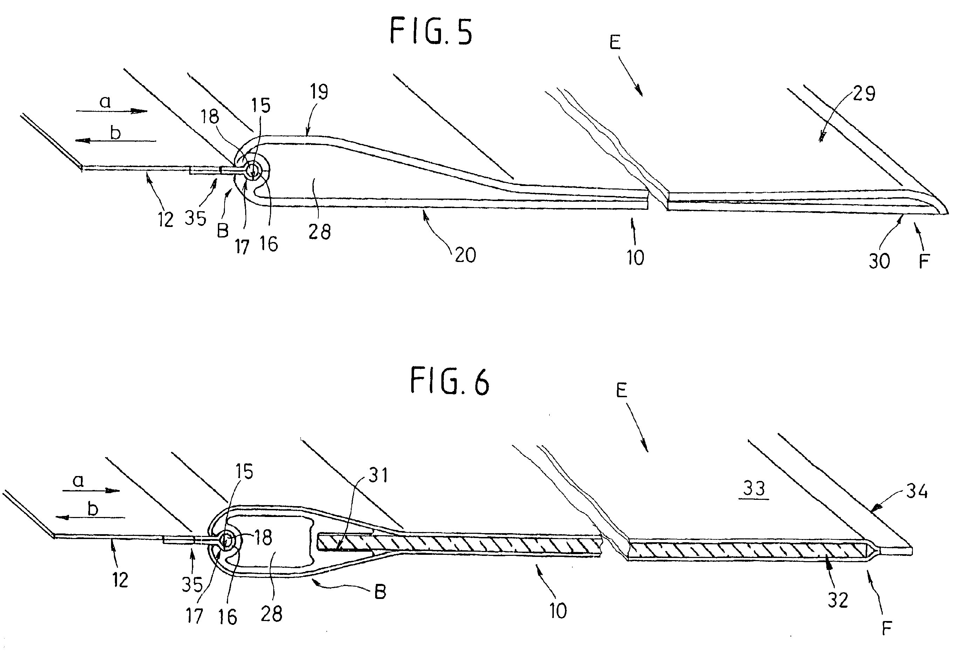

Vom Prinzip her betrachtet, ist die Ausführungsform gemäß Fig. 5 ähnlich der in Fig. 2 dargestellten Bauform. Die Kedernut 15 wird gemäß Fig. 5 gemeinsam von dem oberen Bauteil 19 und von einem unteren Bauteil 20 gebildet. Die beiden Bauteile 19, 20 sind jeweils etwa schalenförmig gestaltet und stellen gemeinsam nicht nur den Befestigungsbereich B, sondern außerdem mit ihren Fortsätzen 29, 30 auch das Flächenelement F dar.

Auch die Ausführungsform gemäß Fig. 6 ähnelt grundsätzlich der Ausführungsform gemäß Fig. 2 und der Ausführungsform gemäß Fig. 5. Nur ist der Befestigungsbereich B bei der Ausführungsform der Fig. 6 ein gesondertes Bauteil, welches in einer U-förmigen Befestigungsnut 31 ein plattenförmiges Versteifungsteil 32 eingesteckt hält. Sowohl der Befestigungsbereich B als auch das plattenförmige Versteifungsteil 32 sind von einem bezugartigen Stoff 33 umspannt, der an seinem freien Randbereich 34 entweder vernäht oder verschweißt ist und welcher benachbart der Werkstoffbahn 12 gegebenenfalls auch in die Kedernut 15 mit eingelegt sein kann.

Bei der Ausführungsform gemäß Fig. 6 kann der als Kunststoffspritzgussteil ausgebildete Befestigungsbereich B die beidseitig vorragenden Haltefortsätze 13 bilden. Ebenso gestattet es die gezeigte Ausführungsform, durch einen mittigen Kanal 28 hindurch eine Haltestange bzw. ein Halterohr hindurchzuschieben, welches mit seinen beidendseitigen Überständen die Haltefortsätze 13 bildet.

Bei der Ausführungsform gemäß Fig. 5 kann entweder das obere Bauteil 19 oder das untere Bauteil 20 die Befestigungsfortsätze 13 bilden. Auch bei der Ausführungsform gemäß Fig. 5 ist es grundsätzlich möglich, den mittleren Kanal 28 zur Aufnahme eines Haltestabes heranzuziehen.

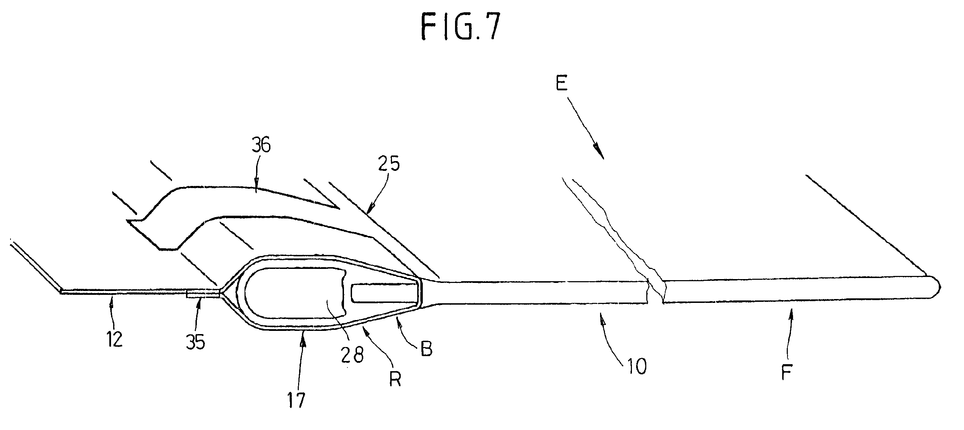

Bei der in Fig. 7 dargestellten Ausführungsform bildet die Werkstoffbahn 12 mit ihrem endseitigen freien Rand R wiederum eine Schlaufe 17, die durch eine Naht oder durch eine Verschweißung bei 35 gesichert ist und in welche der z.B. ein Kunststoffspritzgussteil bildende Befestigungsbereich B eingelegt ist. An dem Befestigungsbereich B können auch die Haltefortsätze 13 beidendseitig angeformt sein. Auch bei dieser Ausführungsform ist es wiederum möglich, den mittigen Kanal 28 zur Aufnahme einer nicht dargestellten Haltestange zu nutzen.

Das Endbord E besteht bei der Ausführungsform gemäß Fig. 7 im wesentlichen nur aus einem Flächenelement F, welches an seinem der Werkstoffbahn zugekehrten Rand 25 clipsartige Rastfortsätze 36 trägt, mit denen es den von der Werkstoffbahn 12 mittels deren Schlaufe 17 umschlungenen Befestigungsbereich B ober- und unterseitig formschlüssig verrastend übergreift.

## Patentansprüche

1. Abdeckrollo (10) für Fahrzeuge, insbesondere für Kombinations- Personenkraftwagen, mit einer fahrzeugseitig befestigbaren, in einer Offen- oder Geschlossenstellung haltbaren, mindestens teilweise flexiblen, textilen Rollobahn (12), deren sich quer zur Offnungs- (b) oder Schließrichtung (a) erstreckender freier Rand (R) ein gegenüber der Rollobahn (12) steifes Endbord (E) aufweist, welchem mindestens mittelbar zwei fahrzeugseitig lösbar befestigbare, quer zur Öffnungs- (b) oder Schließrichtung (a) der Rollobahn (12) einander entgegengesetzt nach außen vorragende Haltefortsätze (13) zugeordnet sind, wobei das Endbord (E) ein separates Bauteil bildet, welches der Rollobahn (12) benachbart den Haltefortsätzen (13), mittels im wesentlichen formsteifer Formschluß- und/oder Klemmittel (15, 16; 22, 24; B, 36) angefügt ist **dadurch gekennzeichnet, dass** das Endbord (E) eine Kedernut (15) oder Klemmnut (21) aufweist, welche den freien Rand (R) der Rollobahn aufnimmt und welche zu der Rollobahn (12) in dessen Öffnungs- oder Schließrichtung (a, b) fluchtend längsseitig offen gestaltet ist.

2. Abdeckrollo nach Anspruch 1, **dadurch gekennzeichnet, dass** die Aufnahmenut als Kedernut (15) ausgebildet ist, welche den als Keder (16) ausgebildeten freien Rand (R) der Werkstoffbahn (12) aufnimmt.

3. Abdeckrollo nach Anspruch 2, **dadurch gekennzeichnet dass** die Kedernut (15) von einem einstückigen, stoffschlüssig 25 zusammenhängenden Formteil gebildet ist.

4. Abdeckrollo nach Anspruch 2, **dadurch gekennzeichnet, dass** die Kedernut (15) von zwei aneinander gefügten und aneinander befestigten Bauteilen (19, 20) gebildet ist, deren Befestigungsfuge die Kedernut (15) entlang deren Längserstreckung teilt.

5. Abdeckrollo nach Anspruch 1, **dadurch gekennzeichnet, dass** das Endbord (E) als formsteife Klemmittel eine Klemmnut (21) und eine den freien Rand (R) der Werkstoffbahn (12) gegen den Klemmnut-Boden (24) pressende Klemmleiste (22) aufweist.

6. Abdeckrollo nach Anspruch 5, **dadurch gekennzeichnet, dass** Klemmnut (21)und Klemmleiste (22) von einem einstückigen, stoffschlüssig zusammenhängenden Formteil gebildet sind.

7. Abdeckrollo nach Anspruch 5, **dadurch gekennzeichnet, dass** Klemmnut (21) und Klemmleiste (22) von aneinander gefügten und aneinander befestigten Bauteilen (19, 20) gebildet sind.

8. Abdeckrollo nach einem der Ansprüche 1 bis 7, **dadurch gekennzeichnet, dass** das Endbord (E) einen Formschluß- und/oder Klemmittel (15; 22, 24) bildenden Befestigungsbereich (B) und mindestens ein sich an den Befestigungsbereich (B) anschließendes, den freien Randbereich des Endbords (E) bildendes Flächenelement (F) aufweist.

9. Abdeckrollo nach Anspruch 8, **dadurch gekennzeichnet, dass** Befestigungsbereich (B) und Flächenelement (F) von aneinander befestigten unterschiedlichen Bauteilen (19, 20) gebildet sind.

10. Abdeckrollo nach einem der Ansprüche 7 bis 9, **dadurch gekennzeichnet, dass** der Befestigungsbereich (B) eine von zwei unterschiedlichen Bauteilen (19, 20) gemeinsam gebildete Befestigungsnut (27) aufweist, in welcher das Flächenelement (F) mit seinem zur Werkstoffbahn (12) weisenden Rand (25) form- und/oder klemmschlüssig gehalten ist.

11. Abdeckrollo nach Anspruch 8, **dadurch gekennzeichnet, dass** Befestigungsbereich (B) und Flächenelement (F) von mindestens einem einstückigen und stoffschlüssig zusammenhängenden Formteil gebildet sind.

12. Abdeckrollo nach einem der Ansprüche 1 bis 11, **dadurch gekennzeichnet, dass** die Haltefortsätze (13) an der Werkstoffbahn (12) befestigt sind.

13. Abdeckrollo nach einem der Ansprüche 1 bis 11, **dadurch gekennzeichnet, dass** die Haltefortsätze (13) am Endbord (E) befestigt sind.

14. Abdeckrollo nach einem der Ansprüche 1 bis 13, **dadurch gekennzeichnet, dass** die Hältefortsätze (13) einem anderen Bauteil angeformt sind.

15. Abdeckrollo nach einem der Ansprüche 1 bis 13, **dadurch gekennzeichnet, dass** die Haltefortsätze (13) von den beiden frei nach außen vorragenden Enden einer an der Werkstoffbahn (12) oder an dem Endbord (E) befestigten, sich quer zur Öffnungs- (b) oder Schließrichtung (a) der Werkstoffbahn (12) erstreckenden, Haltestange gebildet sind.

16. Abdeckrollo nach einem der Ansprüche 11 bis 15, **dadurch gekennzeichnet, dass** die Haltefortsätze (13) dem Befestigungsbereich (B) zugeordnet sind, der an der Werkstoffbahn (12) gehalten ist.

17. Abdeckrollo nach Anspruch 16, **dadurch gekennzeichnet, dass** der Befestigungsbereich (B) ein sich quer zur Öffnungs- (b) oder Schließrichtung (a) der Werkstoffbahn (12) erstreckendes etwa stabartiges Bauteil bildet, welches in eine am freien Rand (R) der Werkstoffbahn (12) gebildete Werkstoffbahn-Schlaufe (17) eingelegt ist.

18. Abdeckrollo nach Anspruch 16 oder nach Anspruch 17, **dadurch gekennzeichnet, dass** das Endbord (E) mit seinem Flächenelement (F) am Befestigungsbereich (B) formschlüssig gehalten, insbesondere mittels Rastfortsätze (36) auf dem Befestigungsbereich (B) aufgerastet ist.

## Claims

1. Roll-up cover (10) for vehicles, in particular for estate cars, with a textile roll-up web (12) which can be fastened on the vehicle side, retained in an open or a closed position, is at least partly flexible and whose free edge (R) extending transversely to the opening (b) or closing direction (a) comprises an end board (E) which is stiff in comparison with the roll-up web (12) and with which two retaining prolongations (13) are at least indirectly associated, which prolongations can be fastened in a releasable manner on the vehicle side and project outwards in opposite directions transversely to the opening (b) or closing direction (a) of the roll-up web (12), wherein the end board (E) forms a separate component which is joined to the roll-up web (12) adjacent to the retaining prolongations (13) by means of substantially dimensionally stable positive-locking and/or clamping means (15, 16, 22, 24, B, 36), **characterised in that** the end board (E) comprises a beading groove (15) or clamping groove (21) which accommodates the free edge (R) of the roll-up web and is open towards the roll-up web (12) at the longitudinal side in an aligned manner in the opening or closing direction (a, b).

2. Roll-up cover according to Claim 1, **characterised in that** the accommodating groove is formed as a beading groove (15) which accommodates the free edge (R), formed as beading (16), of the material web (12).

3. Roll-up cover according to Claim 2, **characterised in that** the beading groove (15) is formed by a one-piece, integrally 25 continuous moulded part.

4. Roll-up cover according to Claim 2, **characterised in that** the beading groove (15) is formed by two components (19, 20) which are joined together and fastened together and the fastening joint of which divides the beading groove (15) along the longitudinal extent thereof.

5. Roll-up cover according to Claim 1 **characterised in that** the end board (E) comprises, as dimensionally stable clamping means, a clamping groove (21) and a clamping ridge (22) which presses the free edge (R) of the material web (12) against the clamping groove bottom (24).

6. Roll-up cover according to Claim 5, **characterised in that** the clamping groove (21) and the clamping ridge (22) are formed by a one-piece, integrally continuous moulded part.

7. Roll-up cover according to Claim 5, **characterised in that** the clamping groove (21) and the clamping ridge (22) are formed by components (19, 20) which are joined together and fastened together.

8. Roll-up cover according to any one of Claims 1 to 7, **characterised in that** the end board (E) comprises a fastening region (B), which forms a positive-locking and/or clamping means (15; 22, 24), and at least one flat element (F) which adjoins the fastening region (B) and forms the free edge region of the end board (E).

9. Roll-up cover according to Claim 8, **characterised in that** the fastening region (B) and the flat element (F) are formed by different components (19, 20) which are fastened together.

10. Roll-up cover according to any one of Claims 7 to 9, **characterised in that** the fastening region (B) comprises a fastening groove (27) which is formed by two different components (19, 20) together and in which the flat element (F) is retained in a positive-locking and/or clamping manner by way of its edge (25) which points towards the material web (12).

11. Roll-up cover according to Claim 8, **characterised in that** the fastening region (B) and the flat element (F) are formed by at least one one-piece, integrally continuous moulded part.

12. Roll-up cover according to any one of Claims 1 to 11, **characterised in that** the retaining prolongations (13) are fastened to the material web (12).

13. Roll-up cover according to any one of Claims 1 to 11, **characterised in that** the retaining prolongations (13) are fastened to the end board (E).

14. Roll-up cover according to any one of Claims 1 to 13, **characterised in that** the retaining prolongations (13) are formed on another component.

15. Roll-up cover according to any one of Claims 1 to 13, **characterised in that** the retaining prolongations (13) are formed by the two ends, projecting freely outwards, of a retaining bar which is fastened to the material web (12) or to the end board (E) and extends transversely to the opening (b) or closing direction (a) of the material web (12).

16. Roll-up cover according to any one of Claims 11 to 15, **characterised in that** the retaining prolongations (13) are associated with the fastening region (B), which is retained at the material web (12).

17. Roll-up cover according to Claim 16, **characterised in that** the fastening region (B) forms an approximately rod-shaped component which extends transversely to the opening (b) or closing direction (a) of the material web (12) and is placed in a material web loop (17) which is formed at the free edge (R) of the material web (12).

18. Roll-up cover according to Claim 16 or according to Claim 17, **characterised in that** the end board (E) is retained in a positive-locking manner at the fastening region (B), in particular locked by means of locking prolongations (36) on the fastening region (B), by way of its flat element (F).

## Revendications

1. Store de recouvrement (10) pour des véhicules, en particulier pour des véhicules automobiles de type break, comprenant une bande de store textile (12), au moins partiellement flexible, pouvant être fixée côté véhicule, pouvant être maintenue dans une position ouverte ou fermée, bande de store dont le bord libre (R) s'étendant de façon transversale par rapport à la direction d'ouverture (b) ou de fermeture (a) présente un bord d'extrémité rigide (E) par rapport à la bande de store (12), bord d'extrémité auquel sont associés au moins deux prolongements de retenue (13) pouvant être fixés, côté véhicule, de façon détachable, et placés à l'opposé l'un de l'autre en faisant saillie vers l'extérieur, de manière transversale par rapport à la direction d'ouverture (b) ou de fermeture (a) de la bande de store (12), où le bord d'extrémité (E) forme une pièce séparée qui est jointe à la bande de store (12), à l'aide de moyens de liaison par sûreté de forme et/ou de moyens de blocage (15, 16, 22, 24, B, 36) pratiquement indéformables et contigus aux prolongements de retenue (13), **caractérisé en ce que** le bord d'extrémité (E) présente une rainure de bourrelet (15) ou une rainure de blocage (21) qui loge le bord libre (R) de la bande de store et qui est configurée en étant ouverte sur le côté longitudinal et en étant alignée par rapport à la bande de store (12), dans sa direction d'ouverture ou de fermeture (a, b).

2. Store de recouvrement selon la revendication 1, **caractérisé en ce que** la rainure de logement est conçue comme une rainure de bourrelet (15) qui loge le bord libre (R) de la bande de matière (12), configuré comme un bourrelet (16).

3. Store de recouvrement selon la revendication 2, **caractérisé en ce que** la rainure de bourrelet (15) est constituée par une pièce de forme continue, d'un seul tenant, réalisée par continuité de matière.

4. Store de recouvrement selon la revendication 2, **caractérisé en ce que** la rainure de bourrelet (15) est formée par deux pièces (19, 20) jointes l'une à l'autre et fixées l'une à l'autre, dont le joint de fixation partage la rainure de bourrelet (15) le long de son étendue longitudinale.

5. Store de recouvrement selon la revendication 1, **caractérisé en ce que** le bord d'extrémité (E) présente une rainure de blocage (21) réalisée comme des moyens de blocage indéformables et un lardon de blocage (22) pressant le bord libre (R) de la bande de matière (12) contre le fond (24) de la rainure de blocage.

6. Store de recouvrement selon la revendication 5, **caractérisé en ce que** la rainure de blocage (21) et le lardon de blocage (22) sont constitués par une pièce de forme continue, d'un seul tenant, réalisée par continuité de matière.

7. Store de recouvrement selon la revendication 5, **caractérisé en ce que** la rainure de blocage (21) et le lardon de blocage (22) sont formés par des pièces (19, 20) jointes l'une à l'autre et fixées l'une à l'autre.

8. Store de recouvrement selon l'une quelconque des revendications 1 à 7, **caractérisé en ce que** le bord d'extrémité (E) présente une zone de fixation (B) formant des moyens de liaison par sûreté de forme et/ou des moyens de blocage (15 ; 22, 24) et présente au moins un élément de surface (F) se raccordant à la zone de fixation (B) et formant la zone du bord libre du bord d'extrémité (E).

9. Store de recouvrement selon la revendication 8, **caractérisé en ce que** la zone de fixation (B) et l'élément de surface (F) sont formés par des pièces différentes (19, 20) fixées l'une à l'autre.

10. Store de recouvrement selon l'une quelconque des revendications 7 à 9, **caractérisé en ce que** la zone de fixation (B) présente une rainure de fixation (27) formée en commun par deux pièces différentes (19, 20), rainure de fixation dans laquelle l'élément de surface (F), avec son bord (25) tourné vers la bande de matière (12), est retenu par sûreté de forme et/ou par blocage.

11. Store de recouvrement selon la revendication 8, **caractérisé en ce que** la zone de fixation (B) et l'élément de surface (F) sont constitués par au moins une pièce de forme continue, d'un seul tenant, réalisée par continuité de matière.

12. Store de recouvrement selon l'une quelconque des revendications 1 à 11, **caractérisé en ce que** les prolongements de retenue (13) sont fixés sur la bande de matière (12).

13. Store de recouvrement selon l'une quelconque des revendications 1 à 11, **caractérisé en ce que** les prolongements de retenue (13) sont fixés sur le bord d'extrémité (E).

14. Store de recouvrement selon l'une quelconque des revendications 1 à 13, **caractérisé en ce que** les prolongements de retenue (13) sont formés sur une autre pièce.

15. Store de recouvrement selon l'une quelconque des revendications 1 à 13, **caractérisé en ce que** les prolongements de retenue (13) sont formés par les deux extrémités faisant saillie librement vers l'extérieur d'une baguette de retenue fixée sur la bande de matière (12) ou sur le bord d'extrémité (E) et s'étendant de façon transversale par rapport à la direction d'ouverture (b) ou de fermeture (a) de la bande de matière (12).

16. Store de recouvrement selon l'une quelconque des revendications 11 à 15, **caractérisé en ce que** les prolongements de retenue (13) sont associés à la zone de fixation (B) qui est maintenue sur la bande de matière (12).

17. Store de recouvrement selon la revendication 16, **caractérisé en ce que** la zone de fixation (B) forme une pièce à peu près en forme de baguette s'étendant de façon transversale par rapport à la direction d'ouverture (b) ou de fermeture (a) de la bande de matière (12), pièce qui est insérée dans une boucle (17) de la bande de matière, formée au niveau du bord libre (R) de la bande de matière (12).

18. Store de recouvrement selon la revendication 16 ou selon la revendication 17, **caractérisé en ce que** le bord d'extrémité (E), avec son élément de surface (F), est retenu par sûreté de forme au niveau de la zone de fixation (B), étant en particulier encliqueté sur la zone de fixation (B), au moyen de prolongements à encliquetage (36).
